(19) Europäisches Patentamt / European Patent Office / Office européen des brevets

(11) **EP 3 754 378 B1**

(12) **EUROPEAN PATENT SPECIFICATION**

(45) Date of publication and mention of the grant of the patent:
**30.10.2024   Bulletin 2024/44**

(21) Application number: **18910923.4**

(22) Date of filing: **20.03.2018**

(51) International Patent Classification (IPC):
**G01S 17/95** $^{(2006.01)}$     **G01S 13/53** $^{(2006.01)}$
**G01S 13/95** $^{(2006.01)}$     **G01S 13/58** $^{(2006.01)}$
**G01S 17/58** $^{(2006.01)}$

(52) Cooperative Patent Classification (CPC):
**G01S 13/581; G01S 13/53; G01S 13/95;
G01S 17/58; G01S 17/95;** Y02A 90/10

(86) International application number:
**PCT/JP2018/011072**

(87) International publication number:
**WO 2019/180821 (26.09.2019 Gazette 2019/39)**

(54) **RADAR SIGNAL PROCESSING DEVICE**

RADARSIGNALVERARBEITUNGSVORRICHTUNG

DISPOSITIF DE TRAITEMENT DE SIGNAL RADAR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.12.2020   Bulletin 2020/52**

(73) Proprietor: **MITSUBISHI ELECTRIC
CORPORATION
Chiyoda-ku
Tokyo 100-8310 (JP)**

(72) Inventors:
• **SAKAMAKI, Hiroshi
  Tokyo 100-8310 (JP)**
• **HARA, Teruyuki
  Tokyo 100-8310 (JP)**

(74) Representative: **Pfenning, Meinig & Partner mbB
Patent- und Rechtsanwälte
An der Frauenkirche 20
01067 Dresden (DE)**

(56) References cited:
WO-A1-2017/068728     JP-A- 2002 257 930
JP-A- 2010 060 318     JP-A- 2014 081 331
JP-A- H11 352 213     US-A1- 2017 269 206

## Description

TECHNICAL FIELD

The present invention relates to a radar signal processing device used in a pulse-Doppler radar or a Doppler lidar (laser radar) that obtains the intensity of precipitation, wind speed distribution, or the like, in the air.

BACKGROUND ART

For devices that observe a discrete distribution type target such as precipitation droplets (rain droplets) in the air or aerosols to obtain the intensity of precipitation or wind speed distribution, a pulse-Doppler radar, a Doppler lidar, a Doppler sodar, a wind profiler, etc., are used. These devices radiate a pulsed electromagnetic wave or sound wave into space as a transmission signal, and receive a reflected wave of the transmission signal from precipitation droplets, atmospheric turbulence, aerosols, or the like. Then, the intensity of precipitation or the like is calculated from the signal strength of a reception signal, and wind speed or the like is calculated from Doppler frequency, and in general, those calculations are derived as spectral moments (signal strength: zero order, Doppler velocity: first order, and Doppler velocity width: second order) which are obtained by converting a time-domain signal to a frequency-domain signal.

Hereinafter, a Doppler lidar will be described as an example, but the same also applies to other devices.

A Doppler lidar radiates a pulsed laser beam having a predetermined time length in a predetermined direction in the air, and receives a reflected wave from aerosols that move at the same speed as wind in the air, and the reflected wave includes overall information about the aerosols in a scattering volume which is determined by a predetermined pulse width and a beam width. Namely, the signal strength which is a zero-order spectral moment is the overall signal strength of the aerosols in the scattering volume, the Doppler velocity which is a first-order spectral moment is the overall Doppler velocity of the aerosols in the scattering volume, and the Doppler velocity width which is a second-order spectral moment is the overall Doppler velocity width of the aerosols in the scattering volume.

As described above, since the Doppler lidar obtains observed values on a per given finite scattering volume, it is difficult to grasp local characteristics based on smaller spatial scale phenomena than the scattering volume. For example, in a case in which the pulse width of the Doppler lidar is 30 m, since the radius of the highest-wind-speed portion (core) of vortex turbulence called wake vortex turbulence which occurs at the rear of an aircraft is on the order of several meters even for large aircraft, when the vortex is observed at a pulse width of 30 m, not only the wind speed of the core portion but also a region therearound whose wind speed is not as high as the core portion is included in the same scattering volume. As a result, overall Doppler velocity which is obtained as an observed value is smaller than the original maximum velocity of the vortex, and there is a possibility that the hazard is underestimated. In addition, when the aircraft wingspan is less than the pulse width, two vortexes with opposite rotation directions are both included in the same scattering volume, and since Doppler velocities having different signs cancel each other out, it may be difficult to detect the vortexes.

For a reduction in an observation region to grasp local characteristics (hereinafter, referred to as implementation of high resolution), there is a possible method in which by reducing a pulse width to be transmitted, a scattering volume is reduced, but in this method, since the energy of a pulse to be transmitted decreases, there is a problem that a range that can be observed is reduced.

In addition, there is a possible method (pulse compression) in which a pulse having been subjected to band widening such as phase modulation or frequency modulation is transmitted and a reception signal is demodulated, by which implementation of high resolution is achieved, but there is a problem that a device configuration is complex and increases cost.

Hence, as a method that does not involves a reduction in observed range and that avoids a significant change (an increase in cost) in device configuration, for example, as shown in Non-Patent Literature 1, there is a method of optimizing a coefficient that is multiplied to complex time-series signals from a plurality of scattering volumes which are overlapped (which is written as "oversampled" in Non-Patent Literature 1, but "overlapped" and "oversampled" have the same meaning in a sense that signals of a predetermined scattering volume length are extracted from oversampled reception signals while the signals are partially overlapped) to increase the gain of a small region of interest. Patent Literature 1 discloses a radar apparatus which uses oversampling on a received signal for estimating a value of a meteorological parameter.

CITATION LIST

NON-PATENT LITERATURES

Non-Patent Literature 1: Tian-You Yu, et al. Resolution Enhancement Technique Using Range Oversampling, J. Atmos. Oceanic Technol., Vol. 23, pp. 228-240, 2006.
Patent Literature 1: US 2017/0269206 A1

SUMMARY OF INVENTION

TECHNICAL PROBLEM

However, in the conventional method described in the above-described related art, although characteristics of a small region of interest are obtained, in order to obtain the characteristics, an optimization technique that frequently uses inverse matrix computation or iterative computation of complex signals is adopted and thus, the amount of computation increases, causing a problem that it is difficult to perform a real-time process upon wide-area observation or upon high-speed observation.

The invention is made to solve a problem such as that described above, and an object of the invention is to provide a radar signal processing device capable of grasping local characteristics of a set region with a low amount of computation and in real time even upon wide-area observation or upon high-speed observation. The invention is defined by the appended claims.

SOLUTION TO PROBLEM

A radar signal processing device according to the invention includes: a signal transmitting and receiving unit for radiating a transmission signal made of an electromagnetic wave or a sound wave into air, and receiving a reflected signal, the reflected signal being the transmission signal reflected by a target in the air; a signal cutting-out unit for cutting out the reflected signal received by the signal transmitting and receiving unit by a specific length while the cut-out signals are overlapped by a set length in at least either one of a range direction and a cross-range direction; a power spectrum calculating unit for calculating a plurality of power spectra from the signals cut out by the signal cutting-out unit; a power spectrum reconstructing unit for performing power spectrum reconstruction by changing a ratio or contribution rate of power spectrum components in a set region, using the plurality of power spectra; and a spectral moment calculating unit for calculating a spectral moment from the power spectrum reconstructed by the power spectrum reconstructing unit.

ADVANTAGEOUS EFFECTS OF INVENTION

The radar signal processing device of the invention cuts out a signal reflected from a target by a specific length while the cut-out signals are overlapped by a set length, to calculate a plurality of power spectra, and reconstructs a power spectrum using the plurality of power spectra. By this, local characteristics of a set region can be grasped with a low amount of computation and in real time.

BRIEF DESCRIPTION OF DRAWINGS

FIG. 1 is a configuration diagram showing a radar signal processing device according to a first embodiment of the invention.
FIG. 2 is a flowchart showing operation of a signal processing unit of the radar signal processing device according to the first embodiment of the invention.
FIGS. 3A to 3D are explanatory diagrams showing a signal cut-out process performed by the radar signal processing device according to the first embodiment of the invention.
FIG. 4 is an explanatory diagram of a weighted addition method of the radar signal processing device according to the first embodiment of the invention.
FIGS. 5A to 5C are explanatory diagrams showing a method for power spectrum reconstruction of the radar signal processing device according to the first embodiment of the invention.
FIG. 6 is a configuration diagram showing a power spectrum reconstructing unit of a radar signal processing device according to a second embodiment of the invention.
FIG. 7 is a flowchart showing operation of a signal processing unit of the radar signal processing device according to the second embodiment of the invention.
FIG. 8 is a configuration diagram showing a power spectrum reconstructing unit of a radar signal processing device according to a third embodiment of the invention.
FIG. 9 is a flowchart showing operation of a signal processing unit of the radar signal processing device according to the third embodiment of the invention.
FIG. 10 is a configuration diagram showing a radar signal processing device according to a fourth embodiment of the invention.
FIG. 11 is a flowchart showing operation of a signal processing unit of the radar signal processing device according to the fourth embodiment of the invention.

DESCRIPTION OF EMBODIMENTS

To describe the invention in more detail, modes for carrying out the invention will be described below with reference to the accompanying drawings.

First Embodiment.

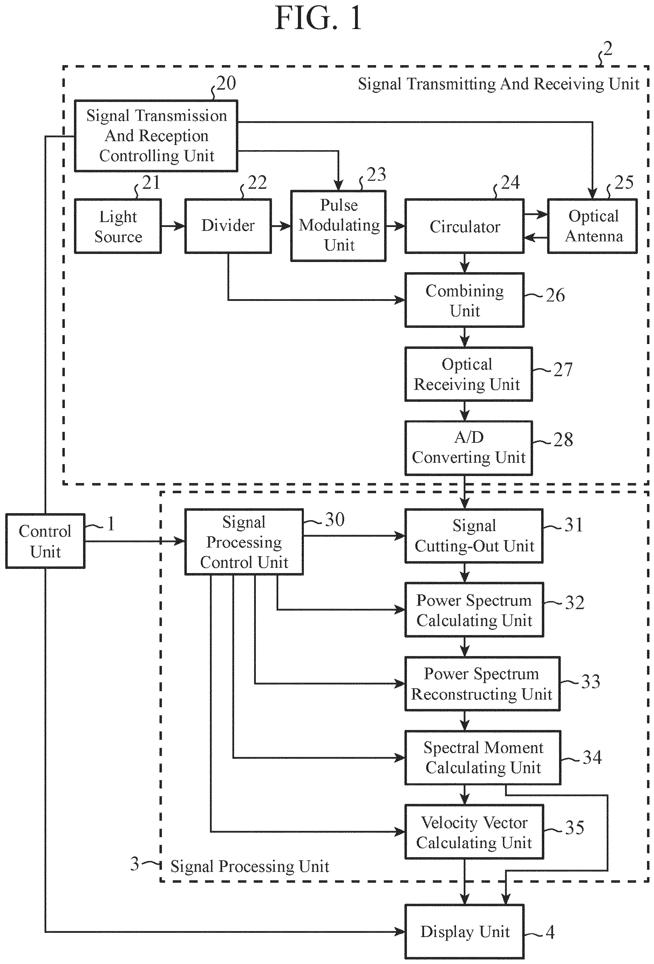

FIG. 1 is a configuration diagram showing a radar signal processing device according to a first embodiment.
The radar signal processing device shown in FIG. 1 includes a control unit 1, a signal transmitting and receiving unit 2, a signal processing unit 3, and a display unit 4. In addition, the signal transmitting and receiving unit 2 includes a signal transmission and reception controlling unit 20, a light source 21, a divider 22, a pulse modulating unit 23, a circulator 24, an optical antenna 25, a combining unit 26, an optical receiving unit 27, and an A/D converting unit 28. Furthermore, the signal processing unit 3 includes a signal processing control unit 30, a signal cutting-out unit 31, a power spectrum calculating unit 32, a power spectrum reconstructing unit 33, a spectral moment calculating unit 34, and a velocity vector calculating unit 35.
The control unit 1 is a control unit that controls each unit of the radar signal processing device, and is configured to output control signals such as specifications for pulse modulation, a trigger signal, and an observation direction to the signal transmission and reception controlling unit 20 in the signal transmitting and receiving unit 2, and output control signals such as specifications for pulse modulation, a trigger signal, specifications for signal cut-out, specifications for power spectrum calculation, specifications for power spectrum reconstruction, and specifications for spectral moment calculation to the signal processing control unit 30 in the signal processing unit 3, and further output a control signal about specifications for display to the display unit 4.

The signal transmission and reception controlling unit 20 in the signal transmitting and receiving unit 2 outputs, on the basis of the trigger signal obtained from the control unit 1, control signals for the pulse modulating unit 23 and the optical antenna 25 among the control signals obtained from the control unit 1. The light source 21 outputs continuous-wave light of a single frequency, and a laser beam from the light source 21 is outputted to the divider 22. The divider 22 provides a predetermined frequency shift to the laser beam from the light source 21 and divides the laser beam into two laser beams, and one of the two laser beams divided by the divider 22 is outputted to the pulse modulating unit 23 and the other is outputted to the combining unit 26. The pulse modulating unit 23 performs pulse modulation on the laser beam inputted from the divider 22. The laser beam having been subjected to the pulse modulation by the pulse modulating unit 23 is outputted to the circulator 24. The circulator 24 switches between output destinations based on an input source of a laser beam. The circulator 24 outputs a laser beam from the pulse modulating unit 23 to the optical antenna 25, and outputs a laser beam from the optical antenna 25 to the combining unit 26.

The optical antenna 25 irradiates the laser beam from the circulator 24 into the air, and collects scattered light of the laser beam from aerosols. The scattered light collected by the optical antenna 25 is outputted to the combining unit 26 through the circulator 24. The combining unit 26 combines the laser beam from the divider 22 with the laser beam outputted from the optical antenna 25 through the circulator 24. The laser beam combined by the combining unit 26 is outputted to the optical receiving unit 27. The optical receiving unit 27 performs heterodyne detection on the laser beam from the combining unit 26, and thereby converts the laser beam into an electrical signal. The electrical signal converted by the optical receiving unit 27 is outputted to the A/D converting unit 28. The A/D converting unit 28 performs Analog-to-Digital (A/D) conversion on the electrical signal from the optical receiving unit 27. A reception signal which is converted into a signal of a predetermined sampling rate by the A/D converting unit 28 is outputted to the signal processing unit 3.

The signal processing control unit 30 in the signal processing unit 3 outputs, on the basis of the trigger signal obtained from the control unit 1, control signals for the signal cutting-out unit 31 to the velocity vector calculating unit 35 among the control signals obtained from the control unit 1. The signal cutting-out unit 31 performs, on the basis of the control signal from the signal processing control unit 30, a process of cutting out the reception signal from the A/D converting unit 28 in the signal transmitting and receiving unit 2 by a specific length while the cut-out signals are overlapped by a set length in at least either one of a range direction and a cross-range direction, and outputs the cut-out signals to the power spectrum calculating unit 32. The power spectrum calculating unit 32 multiplies the signals cut out by the signal cutting-out unit 31 by a predetermined window function on the basis of the control signal from the signal processing control unit 30, and thereafter performs a Fast Fourier Transform (FFT) at a predetermined number of points to calculate a plurality of power spectra, and stores the plurality of power spectra in a storage device which is not shown. The power spectrum reconstructing unit 33 obtains the plurality of power spectra calculated by the power spectrum calculating unit 32 from the storage device which is not shown, on the basis of the control signal from the signal processing control unit 30, performs power spectrum reconstruction on the basis of a predetermined method for power spectrum reconstruction, with the aim of increasing the ratio or contribution rate of power spectrum components in a set region, and outputs a reconstructed power spectrum to the spectral moment calculating unit 34.

The spectral moment calculating unit 34 calculates, on the basis of the control signal from the signal processing control unit 30, a spectral moment (zero-order, first-order, second-order, etc.) from the reconstructed power spectrum inputted from the power spectrum reconstructing unit 33, and stores the spectral moment in a storage device which is not shown or outputs the spectral moment to the display unit 4, or outputs radial velocity which is a first-order moment to the velocity vector calculating unit 35. The velocity vector calculating unit 35 calculates, on the basis of the control signal from the signal processing control unit 30, a velocity vector using Doppler velocity (radial velocity) which is a first-order moment calculated by the spectral moment calculating unit 34, on the basis of a predetermined method for velocity vector calculation, and stores the velocity vector in a storage device which is not shown or outputs the velocity vector to the display unit 4.

The display unit 4 displays, on the basis of the control signal from the control unit 1, spectral moment information or velocity vector information which is inputted from the signal processing unit 3, on the basis of a predetermined scheme.

Next, operation of the radar signal processing device of the first embodiment will be described. First, operation of the signal transmitting and receiving unit 2 will be described.

A laser beam from the light source 21 is subjected to a predetermined frequency shift and divided by the divider 22, and one of the divided laser beams is outputted to the pulse modulating unit 23 and the other is outputted to the combining unit 26. The pulse modulating unit 23 performs pulse modulation on the laser beam. The laser beam outputted from the pulse modulating unit 23 is provided to the optical antenna 25 through the circulator 24 and irradiated into the air from the optical antenna 25. The irradiated laser beam is reflected by a target such as aerosols, and the reflected light is received by the optical antenna 25. The reflected light received by the optical antenna 25 is provided to the combining unit 26 through the circulator 24. The combining unit 26 combines the laser beam from the divider 22 with the reflected light from the circulator 24, and outputs the combined light to the optical receiving unit 27. The optical receiving unit 27 performs heterodyne detection on the output light from the combining unit 26, and thereby converts the output light into an electrical signal. The electrical signal outputted from the optical receiving unit 27 is converted into a digital signal by the A/D converting unit 28, and the digital signal is outputted to the signal processing unit 3.

Next, operation of the signal processing unit 3 will be described.

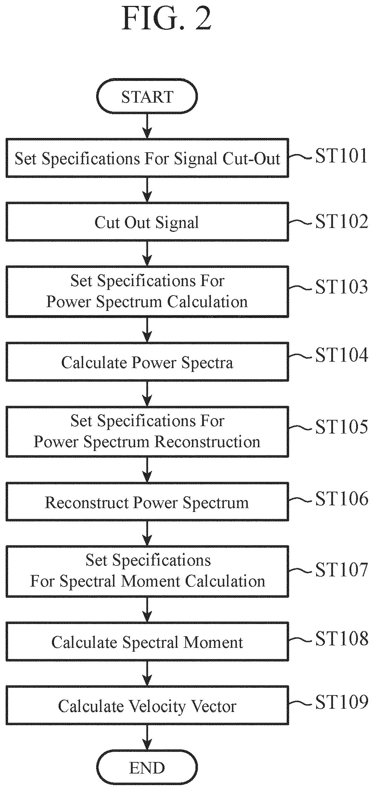

FIG. 2 is a flowchart showing operation of the signal processing unit 3 of the radar signal processing device of the first embodiment.

In the signal processing unit 3, first, the signal cutting-out unit 31 sets specifications for signal cut-out on the basis of a control signal from the signal processing control unit 30 (step ST101). Note that the specifications include a method, a coefficient, etc. The signal cutting-out unit 31 cuts out a signal provided from the signal transmitting and receiving unit 2, on the basis of the set signal cut-out method (step ST102). The power spectrum calculating unit 32 sets specifications for power spectrum calculation on the basis of a control signal from the signal processing control unit 30 (step ST103), and calculates power spectra on the basis of the specifications for power spectrum calculation (step ST104). In addition, the power spectrum reconstructing unit 33 sets specifications for power spectrum reconstruction on the basis of a control signal from the signal processing control unit 30 (step ST105), and reconstructs a power spectrum on the basis of the specifications for power spectrum reconstruction (step ST106). Furthermore, the spectral moment calculating unit 34 sets specifications for spectral moment calculation on the basis of a control signal from the signal processing control unit 30 (step ST107), and calculates a spectral moment on the basis of the specifications for spectral moment calculation (step ST108). Then, the velocity vector calculating unit 35 calculates a velocity vector on the basis of specifications for velocity vector calculation set on the basis of a control signal from the signal processing control unit 30 (step ST109). Operation of the units from the signal cutting-out unit 31 to the velocity vector calculating unit 35 will be described in more detail below.

The signal cutting-out unit 31 cuts out a reception signal, which is received from the signal transmitting and receiving unit 2 and sampled at a predetermined sampling rate, by a specific time length while the cut-out signals are overlapped by a preset length in at least either one of a range direction and a cross-range direction. At this time, the overlapping length is determined by the length of a set region, and the cut-out length in a time direction (range direction) is determined by transmission pulse width. These lengths are set on the signal cutting-out unit 31 by the control unit 1 through the signal processing control unit 30.

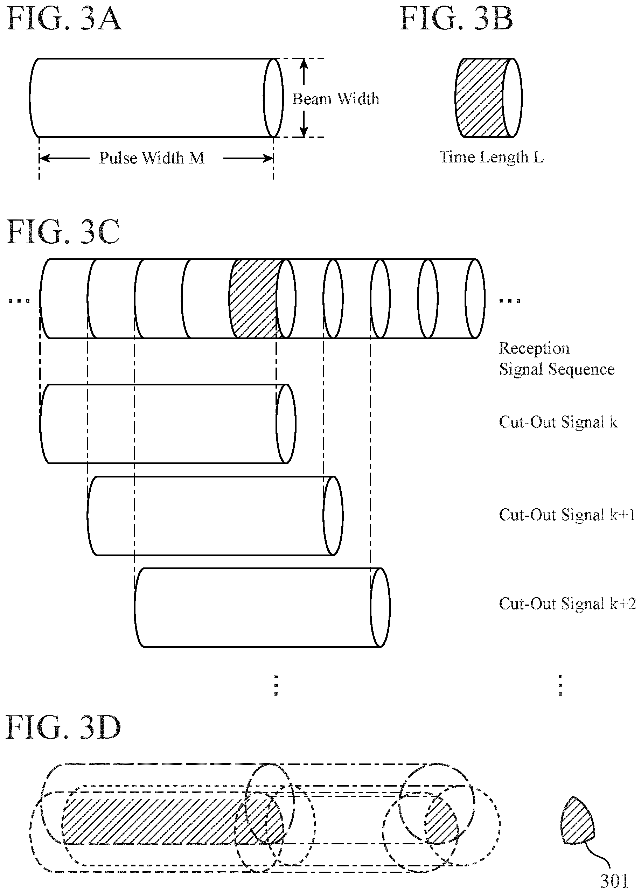

FIG. 3 is a conceptual diagram of a signal cut-out process. FIG. 3A shows a (original) scattering volume determined by a pulse width M and a beam width, and FIG. 3B shows a set region. An example of FIG. 3B shows a case in which a time length L is 1/5 of the pulse width M. In addition, FIG. 3C shows a concept of a signal cut-out in the range direction, and FIG. 3D shows a concept of a signal cut-out in the cross-range direction.

As shown in FIG. 3C, when a signal is cut out in the range direction (time direction), a reception signal is cut out by the scattering volume while the cut-out signals are overlapped by the length L of the set region. In addition, when a signal is cut out in the cross-range direction, the control unit 1 performs setting in advance on the signal transmitting and receiving unit 2 to scan beams while the beams are overlapped, and as shown in FIG. 3D, a scattering volume in which adjacent beams have the same range is cut out as a set region 301.

Note that the number of signals cut out for a single set region is determined by a reconstruction method of the power spectrum reconstructing unit 33, and the reconstruction method is set by the control unit 1 through the signal processing control unit 30.

The power spectrum calculating unit 32 performs a Fourier transform (a specific technique is a Fast Fourier Transform (FFT) process) on the reception signals cut out by the signal cutting-out unit 31, on a per reception signal basis and thereby calculates a plurality of power spectra. Note that in general when an FFT is performed on a finite-length signal, a time signal is multiplied by a window function (e.g., a Hamming window or a Han (Hanning) window). In addition, since a reception signal of one pulse (corresponding to the scattering volume) is very weak and is susceptible to fluctuations such as noise, in general, a process is performed in which a predetermined number of incoherent integrations (non-coherent integrations) are performed to reduce fluctuations, improving detectability.

The power spectrum calculating unit 32 outputs the plurality of power spectra calculated in the above-described manner to a storage device which is not shown.

The power spectrum reconstructing unit 33 reconstructs a power spectrum having a high ratio or contribution rate of a set region, using each power spectrum calculated by the power spectrum calculating unit 32 and superimposed on the set region. A possible method for power spectrum reconstruction includes a method for maximizing a coefficient of a set region obtained after weighted addition of power spectra.

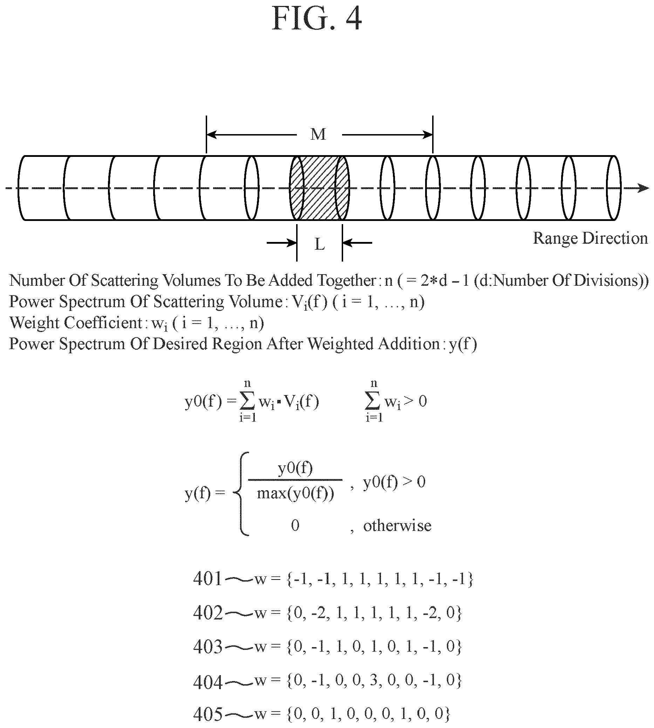

FIG. 4 shows a conceptual diagram of such a weighted addition method.

In this example, the scale of a set region in the range direction is 1/5 of the original scattering volume (the number of division d = 5), and the number of scattering volumes superimposed on the set region (the number of scattering volumes n to be added together) is nine. For weight coefficients 401 to 405 shown in FIG. 4, the weight coefficient 401 is an example case of using the power spectra of nine scattering volumes, the weight coefficient 402 seven scattering volumes, the weight coefficient 403 five scattering volumes, the weight coefficient 404 three scattering volumes, and the weight coefficient 405 two scattering volumes. Any weight coefficient can be used as long as a positive sum total is obtained.

In addition, when weighted addition is performed in the range direction (time direction), a value obtained by multiplying the weight coefficients 401 to 405 by a transmission pulse shape wt and a window function wf which is used upon a power spectrum calculation process can be used as a weight coefficient.

Another possible method for power spectrum reconstruction includes a method in which a set region is considered to be a common portion between the power spectra of adjacent scattering volumes, and a minimum value on a frequency axis (common portion) is adopted.

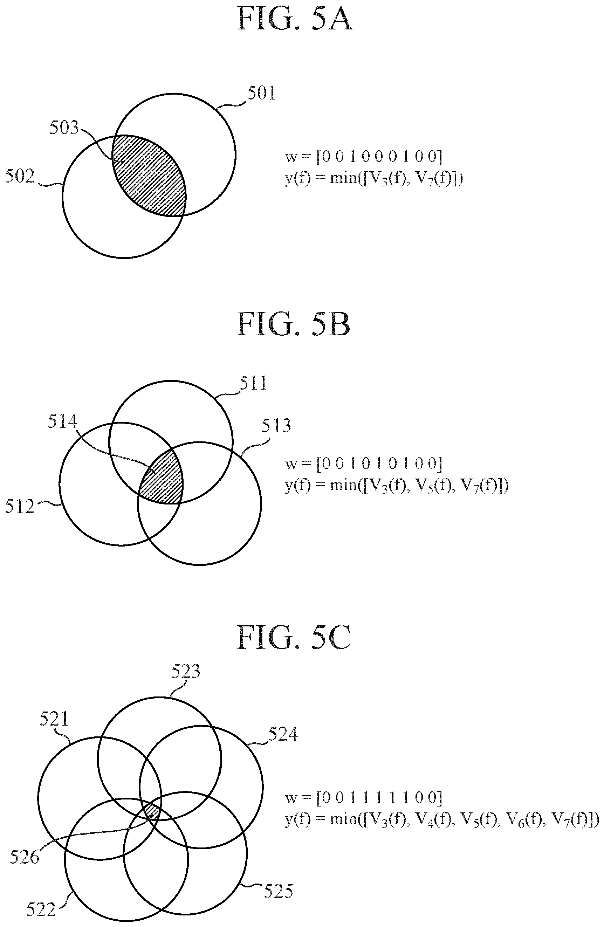

FIG. 5 shows a conceptual diagram of such a method for power spectrum reconstruction. FIG. 5A shows a case of using two scattering volumes, FIG. 5B shows a case of using three scattering volumes, and FIG. 5C shows a case of using five scattering volumes. Note that in these drawings,

the number of scattering volumes: n (= 2 * d - 1 (d: the number of divisions)),
the power spectrum of a scattering volume: Vi(f) (i = 1, ..., n),
weight coefficient: $w_i$ (i = 1, ..., n), and
the power spectrum of a set region : y(f)

$$y(f) = \min ([w_i \cdot V_i(f)]), (i = 1, ..., n).$$

In an example of FIG. 5A, since the weight coefficient w = [001000100], using the third and seventh scattering volumes, a common portion 503 between power spectra 501 and 502 of the two scattering volumes is set as the power spectrum $y(f) = \min ([V_3(f), V_7(f)])$ of a set region. In addition, in an example of FIG. 5B, since the weight coefficient w = [001010100], using the third, fifth, seventh scattering volumes, a common portion 514 between power spectra 511, 512, and 513 of the three scattering volumes is set as the power spectrum $y(f) = \min ([V_3(f), V_5(f), V_7(t)])$ of a set region. Furthermore, in an example of FIG. 5C, since the weight coefficient w = [001111100], using five scattering volumes including the third to seventh scattering volumes, a common portion 526 between power spectra 521 to 525 of the five scattering volumes is set as the power spectrum $y(f) = \min ([V_3(f), V_4(f), V_5(f), V_6(f), V_7(f)])$ of a set region.

The spectral moment calculating unit 34 calculates a spectral moment from the power spectrum reconstructed by the power spectrum reconstructing unit 33. For a method for spectral moment calculation, for example, a zero-order moment (reception strength), a first-order moment (Doppler velocity), or a second-order moment (Doppler velocity width) is calculated. The spectral moment calculating unit 34 outputs the calculated spectral moment to the velocity vector calculating unit 35.

The velocity vector calculating unit 35 calculates a velocity vector from the obtained spectral moment. Note that for a method for calculating a velocity vector, general methods for velocity vector calculation (e.g., a Velocity Azimuth Display (VAD) method, a 3-beam method, a 4-beam method, and a 5-beam method) can be used.

As described above, the radar signal processing device of the first embodiment includes a signal transmitting and receiving unit that radiates a transmission signal made of an electromagnetic wave or a sound wave into the air, and receives a reflected signal which is the transmission signal reflected by a target in the air; a signal cutting-out unit that cuts out the reflected signal received by the signal transmitting and receiving unit by a specific length while the cut-out signals are overlapped by a set length in at least either one of a range direction and a cross-range direction; a power spectrum calculating unit that calculates a plurality of power spectra from the signals cut out by the signal cutting-out unit; a power spectrum reconstructing unit that performs power spectrum reconstruction by changing the ratio or contribution rate of power spectrum components in a set region, using the plurality of power spectra; and a spectral moment calculating unit that calculates a spectral moment from the power spectrum reconstructed by the power spectrum reconstructing unit, and thus, can grasp local characteristics of the set region with a low amount of computation and in real time.

In addition, according to the radar signal processing device of the first embodiment, since the power spectrum reconstructing unit performs the power spectrum reconstruction by performing weighted addition of the plurality of power spectra, a reconstructed power spectrum with high accuracy can be obtained.

In addition, according to the radar signal processing device of the first embodiment, since the power spectrum reconstructing unit performs the power spectrum reconstruction by extracting a minimum value as a common portion between the plurality of power spectra, a reconstructed power spectrum with high accuracy can be obtained.

Second Embodiment.

Although the first embodiment shows some methods for power spectrum reconstruction in the range direction and the cross-range direction, since the accuracy of a reconstructed power spectrum (superiority and inferiority between construction methods) depends on the actual air conditions, it is desirable to include means for evaluating the effectiveness of a power spectrum. Hence, a second embodiment shows an example in which after performing a plurality of power spectrum reconstructions, the effectiveness of reconstructed power spectra is evaluated.

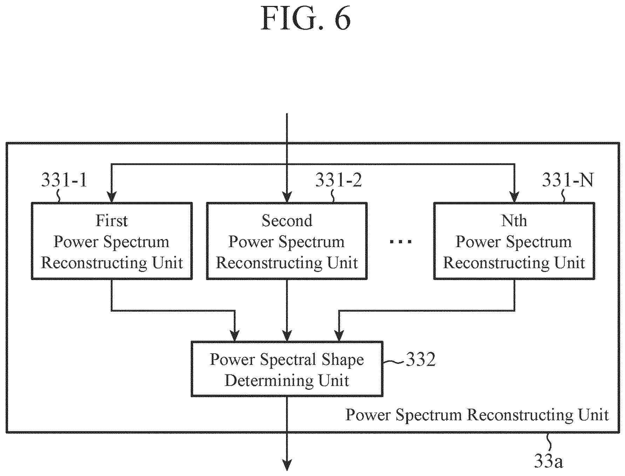

FIG. 6 is a configuration diagram of a power spectrum reconstructing unit 33a of a radar signal processing device of the second embodiment. The power spectrum reconstructing unit 33a of the second embodiment includes a first power spectrum reconstructing unit 331-1, a second power spectrum reconstructing unit 331-2, ..., an Nth power spectrum reconstructing unit 331-N, and a power spectral shape determining unit 332. The first power spectrum reconstructing unit 331-1 to the Nth power spectrum reconstructing unit 331-N are functional units that perform power spectrum reconstruction by different reconstruction methods. The power spectral shape determining unit 332 is a functional unit for selecting a reconstruction method with the highest evaluation by evaluating reconstruction processes reconstructed by the first power spectrum reconstructing unit 331-1 to the Nth power spectrum reconstructing unit 331-N. A possible method for evaluating processes for power spectrum reconstruction is, for example, that utilizing the fact that a typical power spectral shape of a reception signal of a Doppler lidar is a Gaussian distribution type, a comparison is made between reconstructed power spectra and an ideal (Gaussian distribution type) shape of a power spectrum serving as a reference spectral shape. Specifically, a possible method is that differences between frequency bins of reconstructed power spectra and a reference power spectrum are calculated, and a power spectrum with the smallest difference is selected. For another determination method, a power spectrum can be determined using, as indices, the facts, for example, that the power spectrum is unimodal and that the spectral shape is symmetric.

Next, operation of the radar signal processing device of the second embodiment will be described.

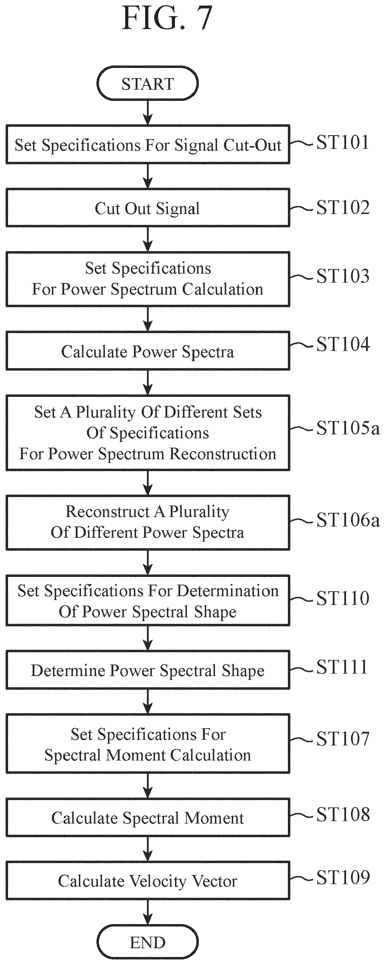

FIG. 7 is a flowchart showing operation of the signal processing unit 3 of the second embodiment. Here, since the processes at step ST101 to ST104 are the same as those of the flowchart of FIG. 2, description thereof is omitted. In the second embodiment, the power spectrum reconstructing unit 33a sets a plurality of different sets of specifications for power spectrum reconstruction on the basis of a control signal from the signal processing control unit 30 (step ST105a), and a plurality of different power spectrum reconstructions are performed by the first power spectrum reconstructing unit 331-1 to the Nth power spectrum reconstructing unit 331-N, on the basis of the specifications for power spectrum reconstruction (step ST106a). Then, the power spectral shape determining unit 332 sets specifications for power spectrum determination on the basis of a control signal from the signal processing control unit 30 (step ST110), and the power spectral shape determining unit 332 determines and selects a power spectrum considered to be most effective, on the basis of the specifications for power spectrum determination (step ST111). Subsequent processes performed by the spectral moment calculating unit 34 and the velocity vector calculating unit 35 (step ST107 to ST 109) are the same as those of the flowchart of FIG. 2.

As such, in the second embodiment, it is configured to determine and select the most ideal spectrum from a plurality of reconstructed power spectra, and thus, a reconstructed power spectrum with higher accuracy can be obtained.

As described above, according to the radar signal processing device of the second embodiment, the power spectrum reconstructing unit performs a plurality of different processes for power spectrum reconstruction, and selects a power spectrum close to a reference spectral shape from among a plurality of obtained power spectra, and thus, a reconstructed power spectrum with higher accuracy can be obtained.

Third Embodiment.

In the second embodiment, after performing a plurality of power spectrum reconstructions, a power spectrum is selected with reference to whether or not the power spectrum is close to the most ideal power spectrum, but by averaging a plurality of power spectra, a power spectrum with a reduced bias component can be obtained. Hence, a third embodiment shows an example in which power spectra are subjected to an averaging process.

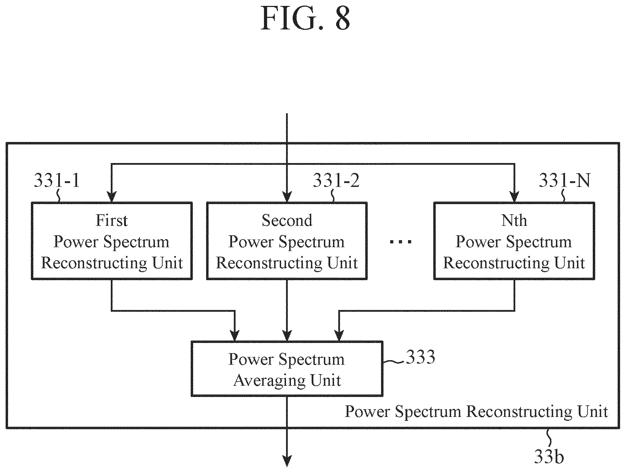

FIG. 8 is a configuration diagram of a power spectrum reconstructing unit 33b of a radar signal processing device of the third embodiment. The power spectrum reconstructing unit 33b of the third embodiment includes a first power spectrum reconstructing unit 331-1, a second power spectrum reconstructing unit 331-2, ..., an Nth power spectrum reconstructing unit 331-N, and a power spectrum averaging unit 333. The first power spectrum reconstructing unit 331-1 to the Nth power spectrum reconstructing unit 331-N are, as in the second embodiment shown in FIG. 6, functional units that perform power spectrum reconstruction by different reconstruction methods. The power spectrum averaging unit 333 performs a process of averaging power spectra reconstructed by the first power spectrum reconstructing unit 331-1 to the Nth power spectrum reconstructing unit 331-N, and outputs an obtained value.

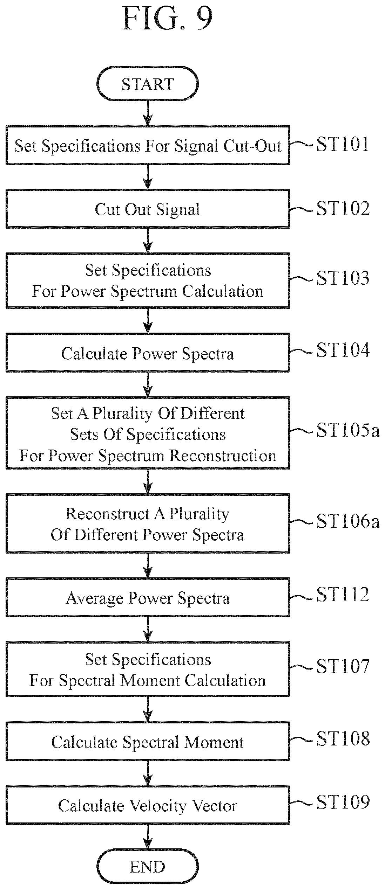

FIG. 9 is a flowchart showing operation of the signal processing unit 3 of the third embodiment. Here, since the processes at step ST101 to ST106a are the same as those of the flowchart of FIG. 7, description thereof is omitted. Then, the power spectrum averaging unit 333 accepts, as input, power spectra from the first power spectrum reconstructing unit 331-1 to Nth power spectrum reconstructing unit 331-N, and determines an average of the power spectra (step ST112). Subsequent processes performed by the spectral moment calculating unit 34 and the velocity vector calculating unit 35 (step ST107 to ST 109) are the same as those of the flowchart of FIG. 2.

As such, in the third embodiment, it is configured to average a plurality of reconstructed power spectra, and thus, a bias component is reduced, making it possible to obtain a reconstructed power spectrum with higher accuracy.

As described above, according to the radar signal processing device of the third embodiment, the power spectrum reconstructing unit performs a plurality of different processes for power spectrum reconstruction, and outputs a result of averaging a plurality of obtained power spectra, and thus, a reconstructed power spectrum with higher accuracy can be obtained.

Fourth Embodiment.

In the third embodiment, a power spectrum with a small bias is obtained by averaging a plurality of results of power spectrum reconstruction, but it is also possible to determine spectral moments for each of a plurality of power spectra and average the spectral moments, which will be described as a fourth embodiment.

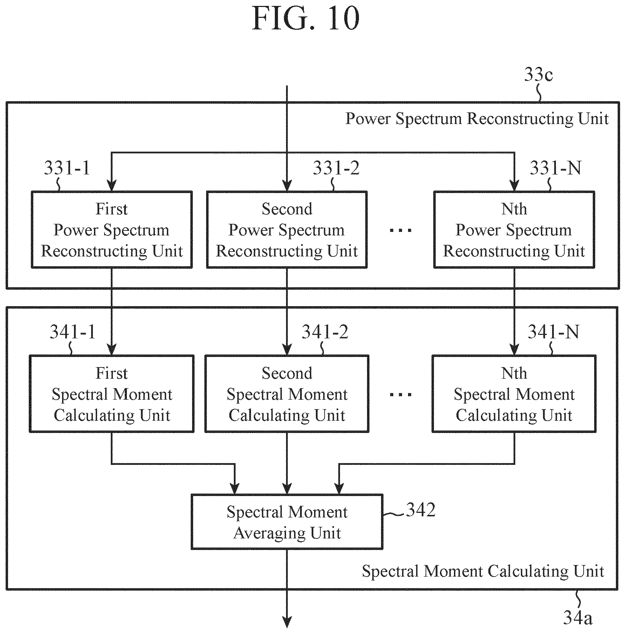

FIG. 10 is a configuration diagram showing a power spectrum reconstructing unit 33c and a spectral moment calculating unit 34a of a radar signal processing device of the fourth embodiment. The power spectrum reconstructing unit 33c includes a first power spectrum reconstructing unit 331-1 to an Nth power spectrum reconstructing unit 331-N, and their configurations are the same as those in FIGS. 6 and 8. The spectral moment calculating unit 34a includes a first spectral moment calculating unit 341-1, a second spectral moment calculating unit 341-2, an Nth spectral moment calculating unit 341-N, and a spectral moment averaging unit 342. The first spectral moment calculating unit 341-1, the second spectral moment calculating unit 341-2, and the Nth spectral moment calculating unit 341-N are functional units that respectively obtain power spectra reconstructed by the first power spectrum reconstructing unit 331-1, the second power spectrum reconstructing unit 331-2, and the Nth power spectrum reconstructing unit 331-N, and calculate spectral moments of the respective power spectra. In addition, the spectral moment averaging unit 342 is a functional unit that calculates an average value of the spectral moments calculated by the first spectral moment calculating unit 341-1 to the Nth spectral moment calculating unit 341-N.

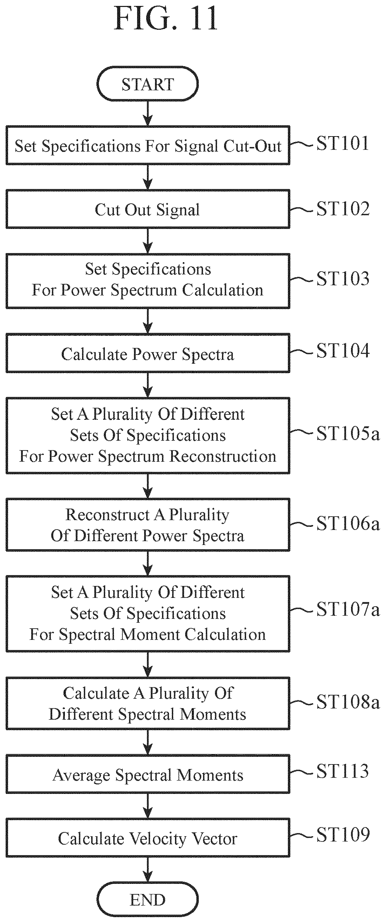

FIG. 11 is a flowchart showing operation of the signal processing unit 3 of the fourth embodiment. Here, since the processes at step ST101 to ST106a are the same as those of the flowcharts of FIGS. 7 and 9, description thereof is omitted. Then, the spectral moment calculating unit 34a sets a plurality of different sets of specifications for spectral moment calculation on the basis of a control signal from the signal processing control unit 30 (step ST107a), and the first spectral moment calculating unit 341-1 to the Nth spectral moment calculating unit 341-N calculate a plurality of different spectral moments on the basis of the specifications for spectral moment calculation (step ST108a). Then, the spectral moment averaging unit 342 obtains each of the spectral moments calculated by the first spectral moment calculating unit 341-1 to the Nth spectral moment calculating unit 341-N, and determines an average of the spectral moments (step ST113). A process performed by the velocity vector calculating unit 35 (step ST109) is the same as that of the flowchart of FIG. 2.

As such, in the fourth embodiment, it is configured to average a plurality of spectral moments, and thus, an advantageous effect of a reduction in a bias component and an advantageous effect of a reduction in the amount of computation can be obtained.

As described above, according to the radar signal processing device of the fourth embodiment, the power spectrum reconstructing unit performs a plurality of different processes for power spectrum reconstruction, and the spectral moment calculating unit calculates a plurality of spectral moments from a plurality of power spectra obtained in the plurality of different processes for power spectrum reconstruction, and outputs a result of averaging the plurality of spectral moments, and thus, a reconstructed power spectrum with higher accuracy can be obtained.

Note that in the invention of this application, a free combination of the embodiments, modifications to any component of the embodiments, or omissions of any component in the embodiments are possible within the scope of the invention.

INDUSTRIAL APPLICABILITY

As described above, radar signal processing devices according to the invention relate to a configuration in which a plurality of power spectra are calculated by cutting out a signal reflected from a target by a specific length while the cut-out signals are overlapped by a set length, and a power spectrum is reconstructed using the plurality of power spectra, and are suitable for use in a pulse-Doppler radar or a Doppler lidar.

REFERENCE SIGNS LIST

1: control unit, 2: signal transmitting and receiving unit, 3: signal processing unit, 4: display unit, 20: signal transmission and reception controlling unit, 21: light source, 22: divider, 23: pulse modulating unit, 24: circulator, 25: optical antenna, 26: combining unit, 27: optical receiving unit, 28: A/D converting unit, 30: signal processing control unit, 31: signal cutting-out unit, 32: power spectrum calculating unit, 33, 33a, 33b, 33c: power spectrum reconstructing unit, 34, 34a: spectral moment calculating unit, 35: velocity vector calculating unit, 331-1: first power spectrum reconstructing unit, 331-2: second power spectrum reconstructing unit, 331-N: Nth power spectrum reconstructing unit, 332: power spectral shape determining unit, 333: power spectrum averaging unit, 341-1: first spectral moment calculating unit, 341-2: second spectral moment calculating unit, 341-N: Nth spectral moment calculating unit, 342: spectral moment averaging unit

## Claims

1. A radar signal processing device comprising:

   a signal transmitting and receiving unit (2) for radiating a transmission signal of an electromagnetic wave or a sound wave into air, and receiving a reflected signal, the reflected signal being the transmission signal reflected from a target in the air;
   a signal cutting-out unit (31) for cutting out the reflected signal received by the signal transmitting and receiving unit (2) by a specific length while the cut-out reflected signals are overlapped by a set length in at least either one of a range direction and a cross-range direction;
   a power spectrum calculating unit (32) for calculating a plurality of power spectra from the cut-out reflected signals cut out by the signal cutting-out unit (31);
   a power spectrum reconstructing unit (33) for performing power spectrum reconstruction by changing a ratio or contribution rate of power spectrum components in a set region, using the plurality of power spectra; and
   a spectral moment calculating unit (34) for calculating a spectral moment from the power spectrum reconstructed by the power spectrum reconstructing unit (33).

2. The radar signal processing device according to claim 1, wherein the power spectrum reconstructing unit (33) performs the power spectrum reconstruction by performing weighted addition of the plurality of power spectra.

3. The radar signal processing device according to claim 1, wherein the power spectrum reconstructing unit (33) performs the power spectrum reconstruction by extracting a minimum value as a common portion among the plurality of power spectra.

4. The radar signal processing device according to any one of claims 1 to 3, wherein the power spectrum reconstructing unit (33) includes a plurality of power spectrum reconstructing units (331-1, 331-2,..., 331-N), and selects a power spectrum close to a reference spectral shape from among a plurality of obtained power spectra on a basis of a plurality of results of power spectrum reconstructions performed by the plurality of power spectrum reconstruction units (331-1, 331-2,... 331-N).

5. The radar signal processing device according to any one of claims 1 to 3, wherein the power spectrum reconstructing unit (33) includes a plurality of power spectrum reconstructing units (331-1, 331-2,..., 331-N), and outputs a result of averaging a plurality of obtained power spectra on a basis of a plurality of results of power spectrum reconstructions performed by the plurality of power spectrum reconstruction units (331-1, 331-2,... 331-N).

6. The radar signal processing device according to any one of claims 1 to 3, wherein the power spectrum reconstructing unit (33) includes a plurality of power spectrum reconstructing units (331-1, 331-2,..., 331-N), and the spectral moment calculating unit (34) calculates a plurality of spectral moments from a plurality of power spectra obtained on a basis of a plurality of results of power spectrum reconstructions performed by the plurality of power spectrum reconstruction units (331-1, 331-2,... 331-N), and outputs a result of averaging the plurality of spectral moments.

## Patentansprüche

1. Radarsignalverarbeitungseinrichtung, umfassend:

   eine Signalübertragungs- und -empfangseinheit (2) zum Aussenden eines Übertragungssignals einer elektromagnetischen Welle oder einer Schallwelle in die Luft und zum Empfangen eines reflektierten Signals, wobei das reflektierte Signal das von einem Ziel in der Luft reflektierte Übertragungssignal ist;
   eine Signalausschneideeinheit (31) zum Ausschneiden des von der Signalübertragungs- und -empfangseinheit (2) empfangenen reflektierten Signals um eine bestimmte Länge, während die ausgeschnittenen reflektierten Signale um eine eingestellte Länge in mindestens entweder einer Bereichsrichtung oder einer Querbereichsrichtung überlappt werden;
   eine Leistungsspektrum-Berechnungseinheit (32) zum Berechnen einer Vielzahl von Leistungsspektren aus den von der Signalausschneideeinheit (31) ausgeschnittenen reflektierten Signalen;

eine Leistungsspektrum-Rekonstruktionseinheit (33) zum Durchführen einer Rekonstruktion eines Leistungsspektrums durch Ändern eines Verhältnisses oder einer Beteiligungsrate von Komponenten des Leistungsspektrums in einer eingestellten Region unter Verwendung der Vielzahl von Leistungsspektren; und

eine Spektralmoment-Berechnungseinheit (34) zum Berechnen eines Spektralmoments aus dem von der Leistungsspektrum-Rekonstruktionseinheit (33) rekonstruierten Leistungsspektrum.

2. Radarsignalverarbeitungseinrichtung nach Anspruch 1, wobei die Leistungsspektrum-Rekonstruktionseinheit (33) die Rekonstruktion des Leistungsspektrums durch Durchführen von gewichteter Addition der Vielzahl von Leistungsspektren durchführt.

3. Radarsignalverarbeitungseinrichtung nach Anspruch 1, wobei die Leistungsspektrum-Rekonstruktionseinheit (33) die Rekonstruktion des Leistungsspektrums durch Extrahieren eines Minimalwerts als gemeinsamen Anteil aus der Vielzahl von Leistungsspektren durchführt.

4. Radarsignalverarbeitungseinrichtung nach einem der Ansprüche 1 bis 3, wobei die Leistungsspektrum-Rekonstruktionseinheit (33) eine Vielzahl von Leistungsspektrum-Rekonstruktionseinheiten (331-1, 331-2, ..., 331-N) aufweist und ein Leistungsspektrum, das nahe an einer Referenz-Spektralform liegt, aus einer Vielzahl von erhaltenen Leistungsspektren auf der Grundlage einer Vielzahl von Ergebnissen von Rekonstruktionen des Leistungsspektrums auswählt, die von der Vielzahl von Leistungsspektrum-Rekonstruktionseinheiten (331-1, 331-2, ..., 331-N) durchgeführt werden.

5. Radarsignalverarbeitungseinrichtung nach einem der Ansprüche 1 bis 3, wobei die Leistungsspektrum-Rekonstruktionseinheit (33) eine Vielzahl von Leistungsspektrum-Rekonstruktionseinheiten (331-1, 331-2, ..., 331-N) aufweist und ein Ergebnis einer Mittelwertbildung einer Vielzahl von erhaltenen Leistungsspektren auf der Grundlage einer Vielzahl von Ergebnissen von Rekonstruktionen des Leistungsspektrums auswählt, die von der Vielzahl von Leistungsspektrum-Rekonstruktionseinheiten (331-1, 331-2, ..., 331-N) durchgeführt werden.

6. Radarsignalverarbeitungseinrichtung nach einem der Ansprüche 1 bis 3, wobei die Leistungsspektrum-Rekonstruktionseinheit (33) eine Vielzahl von Leistungsspektrum-Rekonstruktionseinheiten (331-1, 331-2, ..., 331-N) aufweist und die Spektralmoment-Berechnungseinheit (34) eine Vielzahl von Spektralmomenten aus einer Vielzahl von Leistungsspektren berechnet, die auf der Grundlage einer Vielzahl von Ergebnissen von Rekonstruktionen des Leistungsspektrums erhalten werden, die von der Vielzahl von Leistungsspektrum-Rekonstruktionseinheiten (331-1, 331-2, ..., 331-N) durchgeführt werden, und ein Ergebnis der Mittelwertbildung der Vielzahl von Spektralmomenten ausgibt.

**Revendications**

1. Dispositif de traitement de signal radar, comprenant :

une unité d'émission et de réception de signal (2) pour rayonner un signal d'émission d'une onde électromagnétique ou d'une onde sonore dans l'air, et recevoir un signal réfléchi, le signal réfléchi étant le signal d'émission réfléchi par une cible dans l'air ;

une unité de découpage de signal (31) pour découper le signal réfléchi reçu par l'unité d'émission et de réception de signal (2) d'une longueur spécifique tandis que les signaux réfléchis découpés sont mise en chevauchement d'une longueur définie dans au moins l'une d'une direction de portée et d'une direction de portée transversale ;

une unité de calcul de spectre de puissance (32) pour calculer une pluralité de spectres de puissance à partir des signaux réfléchis découpés ayant été découpés par l'unité de découpage de signal (31) ;

une unité de reconstruction de spectre de puissance (33) pour effectuer une reconstruction de spectre de puissance en modifiant un rapport ou un taux de contribution de composantes de spectre de puissance dans une région définie, en utilisant la pluralité de spectres de puissance ; et

une unité de calcul de moment spectral (34) pour calculer un moment spectral à partir du spectre de puissance reconstruit par l'unité de reconstruction de spectre de puissance (33).

2. Dispositif de traitement de signal radar selon la revendication 1, dans lequel l'unité de reconstruction de spectre de puissance (33) effectue la reconstruction de spectre de puissance en effectuant une addition pondérée de la pluralité de spectres de puissance.

3. Dispositif de traitement de signal radar selon la revendication 1, dans lequel l'unité de reconstruction de spectre de puissance (33) effectue la reconstruction de spectre de puissance en extrayant une valeur minimale en tant que partie commune parmi la pluralité de spectres de puissance.

**4.** Dispositif de traitement de signal radar selon l'une quelconque des revendications 1 à 3, dans lequel l'unité de reconstruction de spectre de puissance (33) inclut une pluralité d'unités de reconstruction de spectre de puissance (331-1, 331-2, ..., 331-N), et sélectionne un spectre de puissance proche d'une forme spectrale de référence parmi une pluralité de spectres de puissance obtenus sur la base d'une pluralité de résultats de reconstructions de spectre de puissance effectuées par la pluralité d'unités de reconstruction de spectre de puissance (331-1, 331-2, ..., 331-N).

**5.** Dispositif de traitement de signal radar selon l'une quelconque des revendications 1 à 3, dans lequel l'unité de reconstruction de spectre de puissance (33) inclut une pluralité d'unités de reconstruction de spectre de puissance (331-1, 331-2, ..., 331-N), et délivre en sortie un résultat de moyennage d'une pluralité de spectres de puissance obtenus sur la base d'une pluralité de résultats de reconstructions de spectre de puissance effectuées par la pluralité d'unités de reconstruction de spectre de puissance (331-1, 331-2, ..., 331-N).

**6.** Dispositif de traitement de signal radar selon l'une quelconque des revendications 1 à 3, dans lequel l'unité de reconstruction de spectre de puissance (33) comprend une pluralité d'unités de reconstruction de spectre de puissance (331-1, 331-2, ..., 331-N), et l'unité de calcul de moment spectral (34) calcule une pluralité de moments spectraux à partir d'une pluralité de spectres de puissance obtenus sur la base d'une pluralité de résultats de reconstructions de spectre de puissance effectuées par la pluralité d'unités de reconstruction de spectre de puissance (331-1, 331-2, ..., 331-N), et produit un résultat de moyennage de la pluralité de moments spectraux.

# FIG. 1

# FIG. 2

```
                    ┌─────────────┐
                    │    START    │
                    └──────┬──────┘
                           ▼
        ┌──────────────────────────────────┐
        │  Set Specifications For Signal Cut-Out │ ── ST101
        └──────────────────┬───────────────┘
                           ▼
        ┌──────────────────────────────────┐
        │           Cut Out Signal         │ ── ST102
        └──────────────────┬───────────────┘
                           ▼
        ┌──────────────────────────────────┐
        │        Set Specifications For    │ ── ST103
        │      Power Spectrum Calculation  │
        └──────────────────┬───────────────┘
                           ▼
        ┌──────────────────────────────────┐
        │       Calculate Power Spectra    │ ── ST104
        └──────────────────┬───────────────┘
                           ▼
        ┌──────────────────────────────────┐
        │        Set Specifications For    │ ── ST105
        │     Power Spectrum Reconstruction│
        └──────────────────┬───────────────┘
                           ▼
        ┌──────────────────────────────────┐
        │     Reconstruct Power Spectrum   │ ── ST106
        └──────────────────┬───────────────┘
                           ▼
        ┌──────────────────────────────────┐
        │          Set Specifications      │ ── ST107
        │     For Spectral Moment Calculation│
        └──────────────────┬───────────────┘
                           ▼
        ┌──────────────────────────────────┐
        │      Calculate Spectral Moment   │ ── ST108
        └──────────────────┬───────────────┘
                           ▼
        ┌──────────────────────────────────┐
        │      Calculate Velocity Vector   │ ── ST109
        └──────────────────┬───────────────┘
                           ▼
                    ┌─────────────┐
                    │     END     │
                    └─────────────┘
```

# FIG. 3A

Beam Width

Pulse Width M

# FIG. 3B

Time Length L

# FIG. 3C

Reception
Signal Sequence

Cut-Out Signal k

Cut-Out Signal k+1

Cut-Out Signal k+2

# FIG. 3D

301

# FIG. 4

Number Of Scattering Volumes To Be Added Together: $n$ ($= 2*d - 1$ (d: Number Of Divisions))
Power Spectrum Of Scattering Volume: $V_i(f)$ ($i = 1, \ldots, n$)
Weight Coefficient: $w_i$ ($i = 1, \ldots, n$)
Power Spectrum Of Desired Region After Weighted Addition: $y(f)$

$$y0(f) = \sum_{i=1}^{n} w_i \cdot V_i(f) \qquad \sum_{i=1}^{n} w_i > 0$$

$$y(f) = \begin{cases} \dfrac{y0(f)}{\max(y0(f))} & , \ y0(f) > 0 \\ 0 & , \ \text{otherwise} \end{cases}$$

401 — $w = \{-1, -1, 1, 1, 1, 1, 1, -1, -1\}$

402 — $w = \{0, -2, 1, 1, 1, 1, 1, -2, 0\}$

403 — $w = \{0, -1, 1, 0, 1, 0, 1, -1, 0\}$

404 — $w = \{0, -1, 0, 0, 3, 0, 0, -1, 0\}$

405 — $w = \{0, 0, 1, 0, 0, 0, 1, 0, 0\}$

# FIG. 5A

$w = [0\ 0\ 1\ 0\ 0\ 0\ 1\ 0\ 0]$
$y(f) = \min([V_3(f), V_7(f)])$

# FIG. 5B

$w = [0\ 0\ 1\ 0\ 1\ 0\ 1\ 0\ 0]$
$y(f) = \min([V_3(f), V_5(f), V_7(f)])$

# FIG. 5C

$w = [0\ 0\ 1\ 1\ 1\ 1\ 1\ 0\ 0]$
$y(f) = \min([V_3(f), V_4(f), V_5(f), V_6(f), V_7(f)])$

# FIG. 6

| 331-1 | 331-2 | 331-N |
|---|---|---|
| First Power Spectrum Reconstructing Unit | Second Power Spectrum Reconstructing Unit ・・・ | Nth Power Spectrum Reconstructing Unit |

Power Spectral Shape Determining Unit ～332

Power Spectrum Reconstructing Unit

33a

# FIG. 7

START

Set Specifications For Signal Cut-Out ~ST101

Cut Out Signal ~ST102

Set Specifications
For Power Spectrum Calculation ~ST103

Calculate Power Spectra ~ST104

Set A Plurality Of Different Sets
Of Specifications
For Power Spectrum Reconstruction ~ST105a

Reconstruct A Plurality
Of Different Power Spectra ~ST106a

Set Specifications For Determination
Of Power Spectral Shape ~ST110

Determine Power Spectral Shape ~ST111

Set Specifications For
Spectral Moment Calculation ~ST107

Calculate Spectral Moment ~ST108

Calculate Velocity Vector ~ST109

END

# FIG. 8

331-1

| First Power Spectrum Reconstructing Unit |

331-2

| Second Power Spectrum Reconstructing Unit |

· · ·

331-N

| Nth Power Spectrum Reconstructing Unit |

| Power Spectrum Averaging Unit | ~333

Power Spectrum Reconstructing Unit

33b

# FIG. 9

```
                    ┌─────────┐
                    │  START  │
                    └────┬────┘
                         ▼
        ┌──────────────────────────────────┐
        │  Set Specifications For Signal Cut-Out │──── ST101
        └──────────────┬───────────────────┘
                       ▼
        ┌──────────────────────────────────┐
        │           Cut Out Signal          │──── ST102
        └──────────────┬───────────────────┘
                       ▼
        ┌──────────────────────────────────┐
        │        Set Specifications         │──── ST103
        │   For Power Spectrum Calculation  │
        └──────────────┬───────────────────┘
                       ▼
        ┌──────────────────────────────────┐
        │       Calculate Power Spectra     │──── ST104
        └──────────────┬───────────────────┘
                       ▼
        ┌──────────────────────────────────┐
        │      Set A Plurality Of Different │
        │         Sets Of Specifications    │──── ST105a
        │  For Power Spectrum Reconstruction│
        └──────────────┬───────────────────┘
                       ▼
        ┌──────────────────────────────────┐
        │       Reconstruct A Plurality     │──── ST106a
        │     Of Different Power Spectra    │
        └──────────────┬───────────────────┘
                       ▼
        ┌──────────────────────────────────┐
        │        Average Power Spectra      │──── ST112
        └──────────────┬───────────────────┘
                       ▼
        ┌──────────────────────────────────┐
        │        Set Specifications         │──── ST107
        │   For Spectral Moment Calculation │
        └──────────────┬───────────────────┘
                       ▼
        ┌──────────────────────────────────┐
        │      Calculate Spectral Moment    │──── ST108
        └──────────────┬───────────────────┘
                       ▼
        ┌──────────────────────────────────┐
        │       Calculate Velocity Vector   │──── ST109
        └──────────────┬───────────────────┘
                       ▼
                    ┌─────────┐
                    │   END   │
                    └─────────┘
```

# FIG. 10

33c

Power Spectrum Reconstructing Unit

| 331-1 | 331-2 | 331-N |
|---|---|---|
| First Power Spectrum Reconstructing Unit | Second Power Spectrum Reconstructing Unit  ・・・ | Nth Power Spectrum Reconstructing Unit |

| 341-1 | 341-2 | 341-N |
|---|---|---|
| First Spectral Moment Calculating Unit | Second Spectral Moment Calculating Unit  ・・・ | Nth Spectral Moment Calculating Unit |

Spectral Moment Averaging Unit ⟋342

Spectral Moment Calculating Unit

34a

# FIG. 11

```
                    ┌─────────────┐
                    │    START    │
                    └──────┬──────┘
                           │
                           ▼
        ┌──────────────────────────────────┐
        │ Set Specifications For Signal Cut-Out │──ST101
        └──────────────────┬───────────────┘
                           │
                           ▼
        ┌──────────────────────────────────┐
        │          Cut Out Signal          │──ST102
        └──────────────────┬───────────────┘
                           │
                           ▼
        ┌──────────────────────────────────┐
        │          Set Specifications       │──ST103
        │    For Power Spectrum Calculation │
        └──────────────────┬───────────────┘
                           │
                           ▼
        ┌──────────────────────────────────┐
        │       Calculate Power Spectra     │──ST104
        └──────────────────┬───────────────┘
                           │
                           ▼
        ┌──────────────────────────────────┐
        │      Set A Plurality Of Different  │
        │         Sets Of Specifications     │──ST105a
        │  For Power Spectrum Reconstruction │
        └──────────────────┬───────────────┘
                           │
                           ▼
        ┌──────────────────────────────────┐
        │       Reconstruct A Plurality      │──ST106a
        │     Of Different Power Spectra     │
        └──────────────────┬───────────────┘
                           │
                           ▼
        ┌──────────────────────────────────┐
        │      Set A Plurality Of Different  │
        │         Sets Of Specifications     │──ST107a
        │   For Spectral Moment Calculation  │
        └──────────────────┬───────────────┘
                           │
                           ▼
        ┌──────────────────────────────────┐
        │        Calculate A Plurality Of    │──ST108a
        │     Different Spectral Moments     │
        └──────────────────┬───────────────┘
                           │
                           ▼
        ┌──────────────────────────────────┐
        │      Average Spectral Moments      │──ST113
        └──────────────────┬───────────────┘
                           │
                           ▼
        ┌──────────────────────────────────┐
        │      Calculate Velocity Vector     │──ST109
        └──────────────────┬───────────────┘
                           │
                           ▼
                    ┌─────────────┐
                    │     END     │
                    └─────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170269206 A1

**Non-patent literature cited in the description**

- **TIAN-YOU YU et al.** Resolution Enhancement Technique Using Range Oversampling. *J. Atmos. Oceanic Technol.*, 2006, vol. 23, 228-240